# EUROPÄISCHE PATENTSCHRIFT

(11) **EP 2 289 300 B1**
(45) Veröffentlichungstag und Bekanntmachung des Hinweises auf die Patenterteilung: **10.09.2014**
(21) Anmeldenummer: 10169940.3
(22) Anmeldetag: 17.07.2010
(51) Int. Cl.: A01C 23/00

(54) **Förderanordnung für Wirtschaftsdünger**
Conveyer for farm fertilizers
Agencement de transport pour engrais commerciaux

(30) Priorität: 13.08.2009 DE 202009010962 U
(43) Veröffentlichungstag der Anmeldung: 02.03.2011
(73) Patentinhaber: Zunhammer, Sebastian, 83301 Traunreut (DE)
(72) Erfinder: Zunhammer, Sebastian, 83301 Traunreut (DE)
(74) Vertreter: Einsiedler, Johannes

(56) Entgegenhaltungen:
- DE-A1- 19 640 037
- DE-U1- 20 107 633
- DE-U1- 29 502 026
- DE-U1-202006 005 307

## Beschreibung

Die Erfindung betrifft eine Förderanordnung für Wirtschaftsdünger, insbesondere für Gülle, für ein landwirtschaftliches Fahrzeug, mit einem als Fahrzeugunterbau dienenden Rohrrahmen mit Längsholmen und Quertraversen, wobei zumindest die Längsholme zur Förderung von Dünger ausgebildeten sind, einem mit Dünger befüllbaren und vom Fahrzeugunterbau getragenen Tank, und zumindest zwei Verteilerköpfen zum Ausbringen des Düngers auf eine landwirtschaftliche Fläche.

Eine Förderanordnung für Wirtschaftsdünger, insbesondere für Gülle, für ein landwirtschaftliches Fahrzeug umfasst im Allgemeinen einen Flüssigkeitstank, eine Pumpe, zumindest zwei 3-Wegehähne und ein Leitungssystem, das zumindest aus einem Ansaugrohr zum Befüllen des Tanks und einer Druckleitung zur Förderung der Gülle aus dem Tank zu einem Verteiler besteht. Eine gattungsgemäße Förderanordnung ist beispielsweise aus der EP 1 696 220 A1 bekannt.

Eine konstruktive Weiterentwicklung im Hinblick auf das Eigengewicht und die Geländegängigkeit eines landwirtschaftlichen Fahrzeugs mit einer Förderanordnung ist aus der EP 1 839 475 A1 bekannt.

Die Druckschrift offenbart ein Tankfahrzeug, insbesondere einen Gülleanhänger mit einem Gülletank, mindestens einer Güllepumpe, einem Fahrgestell zur Aufnahme von zumindest Achsen, Rädern, Deichsel und Gülletank, das dadurch gekennzeichnet ist, dass das Fahrgestell aus einem von Hohlkörpern gebildeten Rahmen besteht, und dass zumindest in einem Teil der Hohlkörper die Förderung der Gülle erfolgt, und bei dem die Güllepumpe derart an dem zur Förderung der Gülle dienenden Hohlkörper angeflanscht ist, dass die Förderung der Gülle über die Güllepumpe direkt im Rahmen erfolgt.

Die Besonderheit liegt darin, dass größtenteils keine separaten Leitungen zum Fördern der Gülle erforderlich sind, da die Gülle in einem Rohrrahmen mittels einer Pumpe von einem Ende des Gülletankwagens zum anderen Ende förderbar ist.

Der Druck in gattungsgemäßen Förderanordnungen ist aus Gründen einer Verschleißminimierung vorzugsweise möglichst gering zu halten, da die abrasiven Inhaltsstoffe in der Gülle einen mehrfach erhöhten Verschleiß der Pump- und Ventileinrichtungen bei einem einfach erhöhten Druck in der Anordnung bedingen. Dies führt zudem zu kürzeren Wartungsintervallen.

Demnach wäre es technisch sinnvoll, bei leistungsstarken Pumpeneinrichtungen den Querschnitt des Rohrrahmens zu vergrößern, um einem Druckanstieg in der Förderanordnung entgegenzuwirken. Dies hat jedoch den Nachteil, dass der Rohrrahmen des Fahrgestells schwerer ausgebildet sein muss als eigentlich nötig, was sich negativ auf das Verhältnis von Eigengewicht des landwirtschaftlichen Fahrzeugs und Nutzlast auswirkt. Ein geringes Eigengewicht des Fahrzeugs ist aufgrund des geringeren Kraftstoffverbrauchs und des geringeren Bodendrucks auf die landwirtschaftliche Nutzfläche vorteilhaft.

Wirtschaftsdünger, insbesondere Gülle, ist ein wertvolles Düngemittel und muss nicht nur aufgrund von gesetzlichen Bestimmungen, sondern auch aufgrund von wirtschaftlichen Erwägungen bedarfsgerecht ausgebracht werden. So sollte die Abweichung von einer vorgegebenen auszubringenden Menge an Gülle (Sollmenge) möglichst gering sein, und in der Regel nicht mehr als 10 % betragen.

Förderanordnungen für Gülle für landwirtschaftliche Fahrzeuge münden beispielsweise in sogenannten Verteilerköpfen für Schleppschlauchsysteme. Mit diesen Systemen wird Gülle bodennah ausgebracht, indem eine Vielzahl von an einem Verteilerkopf angebrachten Schläuchen hinter einem landwirtschaftlichen Fahrzeug auf oder knapp über der Bodenfläche geführt wird. Aufgrund der großen und weiterhin zunehmenden Arbeitsbreiten haben Verteilereinrichtungen in der Regel zwei Verteilerköpfe, zum Beispiel einen für die linke Arbeitsseite und einen für die rechte.

Es können aber auch mehrere Verteilerköpfe sein, z.B. zwei links und zwei rechts. Desweiteren gibt es Injektions-Verteiler, welche die Gülle in gleicher Weise über an Verteilerköpfen angebrachten Schläuchen zu einer Grubberschare oder einem Injektionselement befördern, und die Gülle sofort in den Boden injizieren. Hier gilt das gleiche Prinzip, nämlich dass bei größeren Arbeitsbreiten mehrere Verteilerköpfe nötig sind und eine Breitenabschaltung gebraucht wird, um zum Beispiel bei dreieckigen Flächen weniger zu überlappen.

Da in der Förderanordnung und in den Verteilerköpfen ein Gesamtdruck herrscht, strömt beim Ausbringen in Hanglagen mehr Flüssigkeit zu einem talseitigen Verteilerkopf als zu einem bergseitigen. Dies bedingt eine zum Teil hohe Abweichung von einer vorgegebenen auszubringenden Menge an Gülle und ist daher nachteilig.

Aufgabe der Erfindung ist es, eine gattungsgemäße Förderanordnung für Wirtschaftsdünger, insbesondere für Gülle, für ein landwirtschaftliches Fahrzeug, dergestalt weiterzubilden, dass die vorstehend genannten Nachteile vermieden werden.

Diese Aufgabe wird von einer Förderanordnung gemäß dem Oberbegriff des Anspruchs 1 durch dessen kennzeichnende Merkmale gelöst. Vorteilhafte Aus- und Weiterbildungen der erfindungsgemäßen Förderanordnung sind in den abhängigen Ansprüchen angegeben. Die mit der Erfindung erzielten Vorteile bestehen insbesondere darin, dass Gülle exakter dosiert und zeitsparender ausgebracht werden kann.

Durch die zwei Pumpen, zwei als Druckleitungen ausgebildeten Längsholme und die zwei unabhängig voneinander schaltbaren Wegeventile stromauf der zumindest zwei Verteilerköpfe werden quasi zwei eigenständig druckbeaufschlagbare Förderanordnungen mit je einer eigenen Ansaugleitung oder einer gemeinsamen Ansaugleitung geschaffen.

In vorteilhafter Weise wird durch die eigenständig druckbeaufschlagbare Förderanordnung auch jeder Verteilerkopf eigenständig durch eine Pumpe druckbeaufschlagt, so dass Unterschiede in Hanglagen ausgeglichen werden können. Damit werden nahezu identische Fördervolumina zum linken bzw. zum rechten Verteilerkopf gefördert trotz Höhenunterschieden der Verteilerköpfe.

Neben der eigenständigen Druckbeaufschlagung einer jeden Verteilereinrichtung, besteht auch die Möglichkeit, eine der Druckleitungen abzuschalten, d.h. eine der beiden Leitungen in den Umwälzbetrieb zu schalten, so dass nur einer der beiden stromab betriebenen Verteilerköpfe nicht mit Wirtschaftsdünger versorgt wird. Dies erweist sich insbesondere als vorteilhaft, wenn Gülle in schmaleren Streifen auszubringen ist.

Diese Möglichkeit der Teilbreitenabschaltung mittels der unabhängig voneinander schaltbaren Wegeventile ist für die Düngung an Begrenzungen landwirtschaftlicher Nutzflächen und an Böschungsoberkanten von Gewässern oder bei keilförmigen Grundstücksflächen vorteilhaft.

Eine nicht vorhandene Regelbarkeit der Pumpleistung erfordert bei einer einzelnen leistungsstarken Pumpe bei geringen Dunggaben eine hohe Fahrgeschwindigkeit, die gegebenenfalls im Gelände oder am Hang nicht erreicht werden kann.

Ein weiterer mit der Erfindung erzielter Vorteil besteht demnach in der Verwendung von zwei gegebenenfalls leistungsschwächeren Pumpen, so dass bei einer geringen auszubringenden Menge an Gülle die Förderanordnung mit einer Pumpe betrieben wird und bei einer großen auszubringenden Menge beide Pumpen betrieben werden.

In einer bevorzugten Ausführungsform weist die erfindungsgemäße Förderanordnung ein weiteres Wegeventil stromauf der beiden Pumpen auf. Damit lässt sich in vorteilhafterweise mittels der beiden Pumpen sowohl der Umwälzbetrieb wie auch das Befüllen des Tanks über einen gemeinsamen großen Ansaugschlauch bewerkstelligen.

In einer weiteren bevorzugten Ausführungsform weist die erfindungsgemäße Förderanordnung zumindest zwei weitere Wegeventile stromauf der beiden Pumpen auf, so dass mit zwei parallel verlaufenden Ansaugschläuchen über zwei getrennte Ventile angesaugt werden kann. Vorteilhaft erweist sich der doppelte Saug-Querschnitt durch zwei parallel verlaufende Leitungen so dass der Rohrreibungswiderstand verringert und die Sauggeschwindigkeit erhöht wird.

Eine vorteilhafte Weiterbildung der erfindungsgemäßen Lehre sieht vor, dass die Längsholme rohrförmig ausgebildet und korrosionsfest beschichtet, beispielsweise verzinkt sind. Die zur Förderung von Wirtschaftsdünger ausgebildeten Längsholme können auch korrosionsfeste Innenrohre oder Schläuche aufweisen, in denen der Dünger gefördert wird.

In einer weiteren bevorzugten Ausführungsform sind an den Längsholmen Anschlussflansche ausgebildet, die sowohl als Pumpenanschlüsse als auch als Pumpenträger dienen. Als vorteilhaft erweist es sich zwischen Längsholm und Flansch und zwischen Flansch und Pumpe elastische Zwischenstücke vorzusehen, die geeignet sind Vibrationen, insbesondere der Pumpen, zu dämpfen.

Eine zweckmäßige Ausgestaltung der vorgenannten Ausführungsform sieht vor, dass die Pumpen nicht in Förderrichtung sondern in einem bestimmten Winkel, bevorzugt rechtwinklig, zur Förderrichtung angeordnet werden. Dies hat den Vorteil, dass der Pumpenkörper für Wartungs- und Instandhaltungsarbeiten besser zugänglich ist.

Als Pumpen dienen insbesondere speziell für die Förderung von Gülle ausgebildete Verdrängerpumpen, z.B. Drehkolbenpumpen oder Kreiselpumpen.

Die Pumpen werden bevorzugt von einer Schlepperzapfwelle über eine Gelenkwelle angetrieben. Aber auch ein Antrieb über eine eigenständige Antriebsvorrichtung, wie beispielsweise gekoppelte, parallel laufende Ölmotoren, Hydromotoren oder Elektromotoren sind denkbar.

Sämtliche an sich bekannte Getriebearten eigen sich für die erfindungsgemäße Förderanordnung. Als vorteilhaft erweist sich der Einsatz eines Winkelgetriebes oder eines gemeinsamen T-Getriebes. Die Getriebe haben eine Unter- und/oder Übersetzung gegenüber der Schlepper-Antriebsdrehzahl. Bevorzugt werden beide Pumpen mit einem gemeinsamen Getriebe drehzahlsynchron angetrieben. Die Pumpenwelle ist bedarfsgemäß, insbesondere aber quer oder längs zur Fahrtrichtung, eingebaut.

Das landwirtschaftliche Fahrzeug kann als Pumpentankwagen, beispielsweise als ein- oder mehrachsiger Anhänger oder als Selbstfahrer ausgebildet sein. Die erfindungsgemäß vorgesehenen Wegeventile sind vorzugsweise 3/2-Wegeventile, wobei diese auch durch mehrere einzelne Absperrschieber ersetzt werden können, ohne den Schutzbereich der vorliegenden Erfindung zu verlassen.

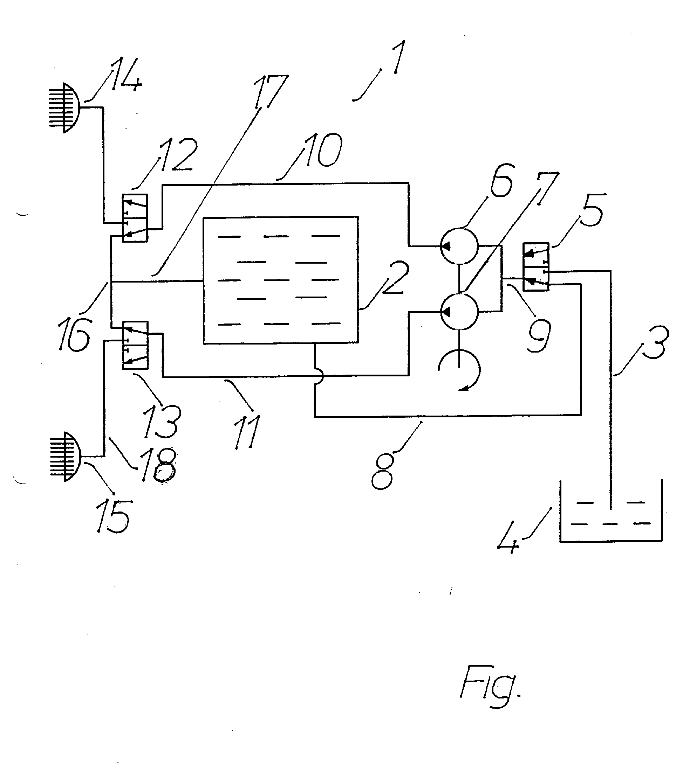

Ein Ausführungsbeispiel der Erfindung ist in der Zeichnung rein schematisch dargestellt und wird nachfolgend näher beschrieben. Es zeigt die einzige
- Figur:: eine Draufsicht auf ein Ausführungsbeispiel einer erfindungsgemäßen Förderanordnung in grob schematischer Darstellung.

Gemäß der Figur wird ein Tank 2 einer Förderanordnung 1 über einen Ansaugschlauch 3 aus eine Güllegrube 4 befüllt. Ein Wegeventil 5 stromauf der beiden Pumpen 6 und 7 ermöglicht in einer ersten Stellung die vorstehend beschriebene Befüllung und in einer zweiten Stellung den "Umwälzbetrieb" bzw. den Betrieb "Ausbringen". In dieser Stellung wird Gülle über eine Druckleitung 8 aus dem Tank 2 über das Wegeventil 5 und über ein T-Stück 9 über die Pumpen 6 und 7 gefördert. Anschließend wird die Gülle über die als Druckleitungen ausgebildeten Längsholme 10 und 11 zu den unabhängig voneinander schaltbaren Wegeventilen 12 und 13 stromauf der beiden Verteilerköpfe 14 und 15 gefördert.

In einer ersten Stellung der Wegeventile 12 und 13 wird Gülle zu den Verteilerköpfen 14 und 15 gefördert; in einer zweiten Stellung wird die Gülle über ein T-Stück 16 und eine Druckleitung 17 zurück in den Tank gefördert. Alternativ kann das gemeinsame T-Stück 16 entfallen und die gemeinsame Druckleitung 17 durch zwei eigene Druckleitungen ausgehend von den Wegeventile 12 bzw. 13 in den Tank 2 ersetzet werden (nicht in der Figur).

Die beiden Wegeventile 12 und 13 lassen sich unabhängig voneinander schalten, so dass beispielsweise eine eigenständig druckbeaufschlagbare Förderanordnung mit der Pumpe 6 und dem als Druckleitung ausgebildeten Längsholm 10 über die Druckleitung 17 im Umwälzbetrieb gefahren werden kann, und die andere eigenständig druckbeaufschlagbare Förderanordnung mit der Pumpe 7 und dem als Druckleitung ausgebildeten Längsholme 11 über die Druckleitung 18 im Betrieb "Ausbringen" gefahren werden kann.

Mit der vorliegenden Erfindung lässt sich Gülle exakter dosiert, insbesondere in Hanglagen, ausbringen; zudem ermöglichen die als Druckleitung ausgebildeten Längsholme eine Einsparung an Eigengewicht und erhöhen die Geländegängigkeit des landwirtschaftlichen Fahrzeugs. Auch kann die auszubringende Menge bei gleichbleibenden Druckverhältnissen in der Förderanordnung verdoppelt werden. Die erfindungsgemäße Förderanordnung eignet sich insbesondere für einen Gülletankwagen.

### Bezugszeichenliste

- 1: Förderanordnung
- 2: Tank
- 3: Ansaugschlauch
- 4: Güllegrube
- 5: erstes Wegeventil
- 6: erste Pumpe
- 7: zweite Pumpe
- 8: erste Druckleitung
- 9: erstes T-Stück
- 10: erster als Druckleitung ausgebildeter Längsholm
- 11: zweiter als Druckleitung ausgebildeter Längsholm
- 12: zweites Wegeventil
- 13: drittes Wegeventil
- 14: erster Verteilerkopf
- 15: zweiter Verteilerkopf
- 16: zweites T-Stück
- 17: zweite Druckleitung
- 18: dritte Druckleitung

## Patentansprüche

1. Förderanordnung (1) für Wirtschaftsdünger, insbesondere für Gülle, für ein landwirtschaftliches Fahrzeug, mit einem als Fahrzeugunterbau dienenden Rohrrahmen mit Längsholmen (10, 11) und Quertraversen, wobei zumindest die Längsholme (10, 11) zur Förderung von Dünger ausgebildet sind, einen mit Dünger befüllbaren und vom Fahrzeugunterbau getragenen Tank (2), und zumindest zwei Verteilerköpfen (14, 15) zum Ausbringen des Düngers auf eine landwirtschaftliche Nutzfläche, **gekennzeichnet durch** zwei Pumpen (6, 7), zwei als Druckleitungen ausgebildete Längsholme (10, 11) und zwei unabhängig voneinander schaltbare Wegeventile (12, 13) stromauf der zumindest zwei Verteilerköpfe (14, 15).

2. Förderanordnung nach Anspruch 1, **gekennzeichnet durch** parallel angetriebene Pumpen (6, 7).

3. Förderanordnung nach Anspruch 1 oder 2, **gekennzeichnet durch** ein weiteres Wegeventil (5) stromauf der beiden Pumpen (6, 7).

4. Förderanordnung nach Anspruch 1 oder 2, **gekennzeichnet durch** zumindest zwei weitere Wegeventile stromauf der beiden Pumpen (6, 7), so dass mit zwei parallel verlaufenden Ansaugschläuchen angesaugt werden kann.

5. Förderanordnung nach einem der Ansprüche 1 bis 4, **dadurch gekennzeichnet, dass** die Pumpen über ein Winkelgetriebe oder ein gemeinsames T-Getriebe angetrieben werden.

6. Förderanordnung nach einem der vorstehenden Ansprüche, **dadurch gekennzeichnet, dass** die Längsholme (10, 11) rohrförmig ausgebildet und korrosionsfest beschichtet sind.

7. Förderanordnung nach einem der Ansprüche 1 bis 5, **dadurch gekennzeichnet, dass** die Längsholme (10, 11) korrosionsfeste Innenrohre oder Schläuche aufweisen.

8. Förderanordnung nach einem der vorstehenden Ansprüche, **dadurch gekennzeichnet, dass** an den Längsholmen (10, 11) ausgebildete Anschlussflansche als Pumpenanschlüsse und Pumpenträger dienen.

9. Landwirtschaftliches Fahrzeug, insbesondere ein- oder mehrachsiger Pumpentankwagen, mit einer Förderanordnung nach einem der Ansprüche 1 bis 8.

## Claims

1. A conveying arrangement (1) for farm dung, especially for liquid manure, for an agricultural vehicle, said conveying arrangement (1) comprising a tubular frame with longitudinal string pieces (10, 11) and crossheads serving as vehicle body wherein at least the longitudinal string pieces (10, 11) are formed for the transport of dung, a tank (2) adapted to be filled with dung and supported by the vehicle body, and at least two distributor heads (14, 15) for discharging the dung onto an agricultural area, **characterized by** two pumps (6, 7), two longitudinal string pieces (10, 11) formed as pressure pipes and two directional control valves (12, 13) upstream of the at least two distributor heads (14, 15) and switchable independently of one another.

2. The conveying arrangement according to claim 1, **characterized by** pumps (6, 7) driven in parallel.

3. The conveying arrangement according to claim 1 or 2, **characterized by** another directional control valve (5) upstream of the pumps (6, 7).

4. The conveying arrangement according to claim 1 or 2, **characterized by** at least two further directional control valves upstream of the pumps (6, 7) so that it can be sucked with two suction hoses extending in parallel.

5. The conveying arrangement according to one of the claims 1 to 4, **characterized in that** the pumps are driven by means of an angular gear or a common T gear.

6. The conveying arrangement according to one of the preceding claims, **characterized in that** the longitudinal string pieces (10, 11) are formed tubularly and are coated in a corrosion resistant manner.

7. The conveying arrangement according to one of the claims 1 to 5, **characterized in that** the longitudinal string pieces (10, 11) include corrosion resistant inner pipes or hoses.

8. The conveying arrangement according to one of the preceding claims, **characterized in that** connection flanges formed at the longitudinal string pieces (10, 11) serve as pump connectors and pump carriers.

9. An agricultural vehicle, especially pump tanker with one or more axles, comprising a conveying arrangement according to one of the claims 1 to 8.

## Revendications

1. Agencement de transport (1) pour engrais commerciaux, en particulier pour lisier, pour un véhicule agricole, comprenant un cadre tubulaire servant de châssis de véhicule et pourvu de longerons (10, 11) et de traverses, au moins les longerons (10, 11) étant réalisés pour le transport d'engrais, comprenant un réservoir (2) pouvant être rempli d'engrais et supporté par le châssis de véhicule, et comprenant au moins deux têtes de distribution (14, 15) pour épandre l'engrais sur une surface agricole utile, **caractérisé par** deux pompes (6, 7), deux longerons (10, 11) réalisés sous forme de conduites sous pression et deux distributeurs (12, 13) pouvant être commutés indépendamment l'un de l'autre en amont des au moins deux têtes de distribution (14, 15).

2. Agencement de transport selon la revendication 1, **caractérisé par** des pompes (6, 7) entraînées en parallèle.

3. Agencement de transport selon la revendication 1 ou 2, **caractérisé par** un distributeur (5) supplémentaire en amont des deux pompes (6, 7).

4. Agencement de transport selon la revendication 1 ou 2, **caractérisé par** au moins deux distributeurs supplémentaires en amont des deux pompes (6, 7), de telle sorte que l'aspiration puisse être réalisée à l'aide de deux tuyaux d'aspiration s'étendant parallèlement.

5. Agencement de transport selon l'une quelconque des revendications 1 à 4, **caractérisé en ce que** les pompes sont entraînées par le biais d'un engrenage conique ou d'un engrenage en T commun.

6. Agencement de transport selon l'une quelconque des revendications précédentes, **caractérisé en ce que** les longerons (10, 11) sont tubulaires et sont pourvus d'un revêtement anticorrosif.

7. Agencement de transport selon l'une quelconque des revendications 1 à 5, **caractérisé en ce que** les longerons (10, 11) comprennent des tubes intérieurs ou des tuyaux résistant à la corrosion.

8. Agencement de transport selon l'une quelconque des revendications précédentes, **caractérisé en ce que** des brides de raccordement réalisées sur les longerons (10, 11) servent de raccords de pompe et de supports de pompe.

9. Véhicule agricole, en particulier camion-citerne à pompes à un ou plusieurs essieux, comprenant un agencement de transport selon l'une quelconque des revendications 1 à 8.
